Europäisches Patentamt

European Patent Office

Office européen des brevets

(11) Veröffentlichungsnummer: **0 213 553**
**A2**

# (12) EUROPÄISCHE PATENTANMELDUNG

(21) Anmeldenummer: 86111549.1

(22) Anmeldetag: 20.08.86

(51) Int. Cl.⁴: **B 01 D 1/00**

(30) Priorität: 02.09.85 DE 3531299
23.06.86 DE 3620956

(43) Veröffentlichungstag der Anmeldung:
11.03.87 Patentblatt 87/11

(84) Benannte Vertragsstaaten:
AT DE FR GB IT SE

(71) Anmelder: Berger, Hildegard
Wannenweg 14
D-6973 Boxberg(DE)

(72) Erfinder: Berger, Hildegard
Wannenweg 14
D-6973 Boxberg(DE)

(54) Termperatursteuerung für Verdampfer.

(57) Die Erfindung betrifft ein Verfahren und Vorrichtungen für die Temperatursteuerung eines gasbeheizten Verdampfers nach DIN 30 696, der zur Erreichung, Konstanthaltung und Begrenzung einer bestimmten Betriebstemperatur mit Heiz-und Steuerelementen ausgestattet ist.

EP 0 213 553 A2

Croydon Printing Company Ltd.

Temperatursteuerung für Verdampfer

Die Erfindung betrifft ein Verfahren zur Erreichung, Konstanthaltung und zur Begrenzung einer bestimmten Betriebstemperatur, vorzugsweise für einen gasbeheizten Flüssiggasverdampfer. Nach der "DIN-Norm 30 696 Verdampfer für Flüssiggas", Ziffer 3.5.3 müssen Verdampfer so ausgerüstet und gesteuert werden, daß eine Gasaustrittstemperatur zwischen 40°C und 80° C eingehalten werden kann. Über die im Innern des Verdampfers auftretenden Temperaturen besagt die DIN-Norm lediglich, daß ein Temperaturbegrenzer vorhanden sein muß, der entweder die Temperatur eines Wärmeträgers auf maximal 100° C begrenzt, oder ein Überschreiten der Gasaustrittstemperatur von 90° C verhindert. Elektrisch beheizte Verdampfer werden zum Teil ohne Zwischenschaltung eines Wärmeträgers betrieben und erreichen an den Übergängen zwischen Heizeinrichtung und Flüssiggas häufig Temperaturen, die weit über 100° C liegen. Bei gasbeheizten Verdampfern amerikanischer Fabrikate "ALGAS" und "MITCHELL" werden mit Flüssiggas gefüllte Druckkessel mit direkter Flamme beheizt. Hierbei können Temperaturen bis zu ca. 500° C auftreten - die Gasaustrittstemperaturen liegen um ca. 120° C. Aus diesen und anderen Gründen entsprechen diese Geräte nicht der DIN 30 696 und sind in Europa nicht zugelassen.

Nach Heinz Cordes: "Propan-Ratgeber" (Strobel-Verlag, Arnsberg) treten bei der Verdampfung von Flüssiggas bereits bei Temperaturen um oder über 80° C ölige Absonderungen auf, die nachfolgende Armaturen, wie Regler, Membranen, Ventile usw. verunreinigen und verkleistern. Bei noch höheren Temperaturen setzt eine Verkokung des Brennstroffes ein. Aus diesem Grunde werden in der Praxis den Verdampfern Schmutzabscheider und Filtereinrichtungen nachgeordnet.

In der Patentschrift DP Nr. 3307520 ist ein Verdampfer beschrieben, der - ohne Druckkessel - mit gasbeheizten Rohrschlangen arbeitet. Unter der Veröffentlichungs-Nr. 0 126 852 A2 des Europäischen Patentamtes (Patentblatt 84/49 vom 14.1.1984) ist der Verdampfer nach o.a. Patent zusätzlich mit einer Elektro-Vorheizung ausgestattet, mit der der Verdampfer zunächst ohne Brennstoffentnahme auf die gewünschte Betriebstemperatur vorgeheizt wird. In der Praxis hat sich nun herausgestellt, daß der für die Elektro-Vorheizung erforderliche Strom nicht immer zur Verfügung steht - wie z.B. bei Straßenbaumaschinen und zur Beheizung von Weichen bei der Eisenbahn.

Darüberhinaus ist die Temperatursteuerung zu träge und je nach der Betriebsart und der jeweiligen Brennstoffentnahme kommt es zu Temperaturschwankungen, die auch oberhalb der vorgeschriebenen Begrenzung liegen können. Bei Stromabschaltungen, die an den Wochenenden für Reparaturarbeiten erforderlich werden können, schaltet sich auch der Verdampfer mit dem angeschlossenen Heizsystem ab, was zu erheblichen Betriebsstörungen führen kann.

Hier will die Erfindung Abhilfe schaffen. Aufgabe der Erfindung ist es, den Verdampfer netzunabhängig zu machen und die Temperatursteuerung so zu gestalten, daß die Betriebsbereitschaft hergestellt und unabhängig von der Betriebsweise im durch die DIN-Vorschrift begrenzten Temperaturbereich aufrecht erhalten werden kann.

Diese Aufgabe wird erfindungsgemäß dadurch gelöst, daß in dem zur Atmosphäre offenen Heizraum des Verdampfers eine mit Gas oder Elektrizität betriebene Begleitheizung so installiert wird, daß im Heizraum Zonen verschiedener Temperaturbereiche entstehen, die ein sinnvolles Zusammenspiel von Temperaturfühlern und Regelsystemen ermöglichen. Unabhängig von der jeweiligen Belastung des Verdampfers kann damit die Betriebstemperatur annähernd konstant gehalten werden. Mit dieser neuen Temperatursteuerung ist es möglich, einen gasbeheizten Verdampfer entsprechend der DIN 30 696 im Temperaturbereich zwischen 40° C und 80° C zu betreiben. Ein besonderer Vorzug dieser Temperatursteuerung besteht darin, daß bei einer Verdampfungstemperatur um ca. 60° C keinerlei schädliche Absonderungen entstehen und auf den Einbau nachgeordneter Abscheider- und Filtereinrichtungen verzichtet werden kann. Vorteilhaft ist auch, daß durch die niedrige Gasaustrittstemperatur ein Re-Kondensieren des Brennstoffes im Verteilernetz verhindert oder erschwert wird. Wesentliche Vorteile ergeben sich auch dadurch, daß die Begleitheizung mit Energie aus der Gasphase des Brennstoffbehälters gespeist werden kann. Damit wird der Verdampfer netzunabhängig - der erforderliche Steuerstrom kann einer Batterie entnommen werden.

Im Folgenden wird die Erfindung an Hand einer lediglich ein Ausführungsbeispiel einer Temperatursteuerung für Verdampfer darstellenden Zeichnung näher erläutert.

Der DIN-Vorschrift entsprechend muß bei direkt beheizten Verdampfern der
für die Verdampfung erforderliche Brennstoff gasformig sein und einen
Druck unter 50 mbar aufweisen. Bei der Inbetriebsetzung des Verdampfers
besteht nun die Möglichkeit, den Brennstoff aus der Gasphase eines Behälters zu entnehmen und bei Durchlauf durch den Verdampfer die Brenner
zu zünden und den Brennstoff aufzuheizen. Nach Erreichen der Betriebstemperatur wird ein Umschaltventil auf die Flüssigphase umgeschaltet und
der Verdampfer kann voll belastet werden. Bei längerer Unterbrechung der
Gasentnahme kühlt der Verdampfer auf unter 40° C ab. Das Sicherheitssystem schaltet unter 40° C den Steuerstrom für das Magnetventil ab und
sperrt die Brennstoffzufuhr. Bei erneuter Gasentnahme muß die Inbetriebsetzung wieder, wie zuvor, über die Gasphase vorgenommen werden.

oder:

Die Betriebsbereitschaft wird dadruch hergestellt, daß der Heizraum mittels Elektro- oder Gasheizung bis zur Einschaltung der Flüssigphase auf
die erforderliche Betriebstemperatur aufgeheizt wird. Diese Vor- und Begleitheizung kann auch während der gesamten Betriebsdauer wirksam bleiben
oder über Thermostat gesteuert zu- und abgeschaltet werden, so daß die
Betriebsbereitschaft auch dann aufrechterhalten bleibt, wenn längere Zeit
kein Brennstroff für Verbraucher entnommen wird. Eine ähnliche Betriebsweise wird nachstehend näher beschrieben.

Kernstück eines gasbeheizten Verdampfers 1 ist ein sinnvolles Zusammenspiel von Temperaturfühlern und Regelsystemen in verschiedenen Temperaturzonen. Im zur Atmosphäre offenen Heizraum 2 werden Heizkörper - hier Infrarotstrahler 3 - so angeordnet, daß Zonen verschiedener Temperaturen,
nämlich die Temperaturzonen A/B und C entstehen.

Temperaturzone 4-A

Der am Steuerrohr 5 wirksame Infrarotstrahler 3 ist so bemessen, daß eine
Mindesttemperatur von 45° C erreicht und gehalten wird. Der im Steuerrohr
5 angeordnete Temperaturfühler 6 steuert über Kapillarrohr den Thermostat
7 und schließt bei 40° C den Stromkreis zum Magnetventil 8 und hält dieses
offen.

Temperaturzone 4-B

Hier werden Infrarotstrahler 3 so angeordnet und bemessen, daß die Rohrschlangen 9 auf ca. 60 bis 70° C erwärmt werden. Wird c    ...venti i 9
geöffnet, strömt Brennstoff über die Rohrschlangen 9 bis zum Steuerrohr 5

ein. Dieser Brennstoff nimmt die vorgesehene Betriebstemperatur von ca. 60° C an.

Temperaturzone 4-C

In diesem Bereich muß der Infrarotstrahler 3 so bemessen sein, daß während der Vor- bzw. Zwischenheizzeit die Temperatur zwischen 70° bis 90° C liegt. Der Temperaturfühler 10 steuert über Kapillarrohr 11 den Regelautomat 12, welcher die Brennstoffzufuhr zu den Verdampfungsbrennern 13 nur dann freigibt, wenn durch Brennstoffentnahme für Gasverbraucher 14 die Temperatur am Temperaturfühler 10 unter 65° C fällt. Damit ist sichergestellt, daß die Rohrschlangen 9 nicht überhitzt werden können.

Die für die Vor- bzw. Begleitheizung erforderliche Energie wird aus der Gasphase 15 des Behälters 16 entnommen und über Leitung 17 dem Umschaltventil 18 zugeführt. Auf Stellung Gasphase wird ein Tastschalter 19 betätigt, der den durch Thermostat 7 unterbrochenen Stromkreis überbrückt und das Magnetventil 8 öffnet. Der gasförmige Brennstoff strömt jetzt in das Rohrsystem bis in das Steuerrohr 5. Ober den Niederdruckregler 20 gelangt der Brennstoff in den verstellbaren Mehrstufenregler 21 sowie zu den Infrarotstrahlern 3. Diese werden gezündet und beheizen die im Heizraum 1 vorgesehenen Temperaturzonen 4-A/B u. C.

Im Steuerrohr 5 ist ein weiterer Temperaturfühler 22 angeordnet, der über Kapillarrohr die erreichte Temperatur am Thermometer 23 anzeigt und über eingebaute Schaltkontakte , temperaturabhängig in bekannter Weise, die Heizelemente 3 steuert.

Nach Erreichen der eingestellten Betriebstemperatur erfolgt durch die Betätigung des Umschaltventils 18 die Umschaltung von der Gasphase 15 auf die Flüssigphase 24. Danach wird der über Regelautomat 12 gespeiste Zündbrenner 25 gezündet und der Verdampfer 1 kann mit wechselnder oder voller Last betrieben werden. Erst wenn für Gasverbraucher 14 Brennstoff entnommen wird und die Gastemperatur unter 65° C fällt, gibt der Regelautomat 12 die Brennstoffzufuhr für die Verdampfungsbrenner 13 frei und diese werden durch die Zündflamme des Zündbrenners 25 gezündet. Der Regelautomat 12 führt den Verdampfungsbrennern 13 immer nur die Energiemengen zu, die für die Verdampfung des durchfließenden Brennstoffes erforderlich sind. Geht einmal die Zündflamme aus, unterbricht die im Regelautomat 12 eingebaute thermoelektrische Zündsicherung auch die Brennstoffzufuhr zu den Verdampfungsbrennern 13. Die über den Mehrstufenregler 21 versorgten Infrarotstrahler 3 halten den Verdampfer 1 weiterhin auf Betriebstemperatur. Erst wenn im Heizraum 2 aus irgendeinem Grund eine Überhitzung eintritt, unterbricht der vom Temperaturfühler 26 gesteuerte Thermostat 27 bei 90° C den Steuerstrom. Damit schließt das Magnetventil 8 und der Verdampfer 1 ist vollständig stillgelegt. Wird dem Verdampfer 1 durch Überlastung zuviel Brennstoff entnommen, fällt die Gasaustrittstemperatur unter 40° C und der Thermostat 7 schaltet das Magnetventil 8 ab und der Verdampfer 1 ist außer Betrieb. Damit ist sichergestellt, daß kein flüssiger Brennstoff zu den Gasverbrauchern 14 gelangen kann.

Der Verdampfer 1 kann mit Steuerstrom 29 aus einer Batterie von 12 oder 24 V oder mit 220 V betrieben werden.

70 <u>Bezugsziffern zur Zeichnung</u>

| | |
|---|---|
| 1 | Verdampfer |
| 2 | Heizraum |
| 3 | Heizelemente/Infrarotstrahler |
| 4 | Temperaturzonen A/B u. C |
| 5 | Steuerrohr |
| 6 | Temperaturfühler |
| 7 | Thermostat |
| 8 | Magnetventil |
| 9 | Rohrschlangen |
| 10 | Temperaturfühler |
| 10 A | Tauchhülse |
| 11 | Kapillarrohr |
| 12 | Regelautomat |
| 13 | Verdampfungsbrenner |
| 14 | Gasverbraucher |
| 15 | Gasphase |
| 16 | Behälter |
| 17 | Leitung |
| 18 | Umschaltventil |
| 19 | Tastschalter |
| 20 | Niederdruckregler |
| 21 | Mehrstufenregler |
| 22 | Temperaturfühler |
| 23 | Thermometer |
| 24 | Flüssigphase |
| 25 | Zündbrenner |
| 26 | Temperaturfühler |
| 27 | Thermostat |
| 28 | Sicherheitsventil |
| 29 | Steuerstrom |
| 30 | Stromquelle |
| 31 | Kamin |

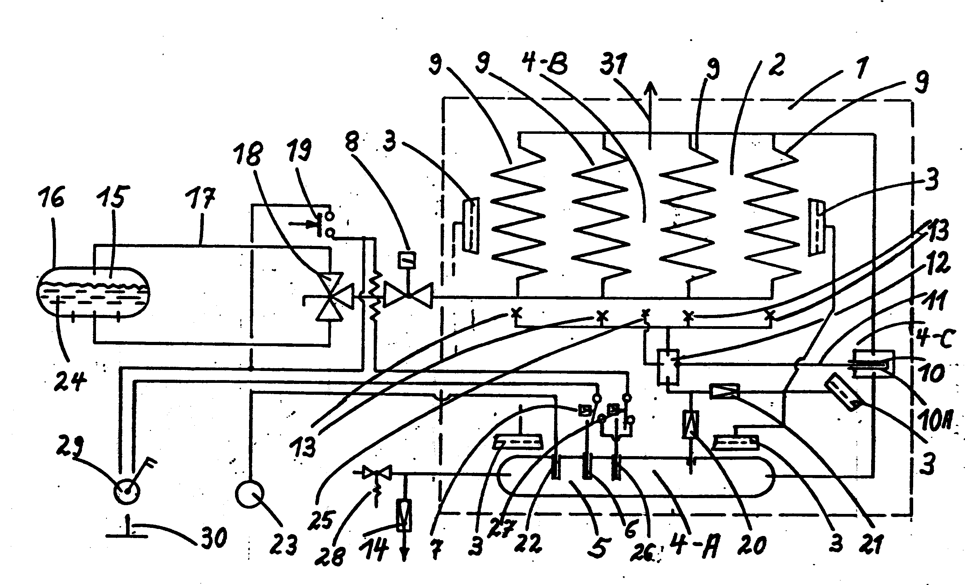

## Patentansprüche

1. Vorrichtung und Verfahren zur Erreichung, Konstanthaltung und zur Begrenzung einer vorgegebenen Betriebstemperatur eines in einem zur Atmosphäre offenen Heizraumes (2) untergebrachten Verdampfers (1) dadurch gekennzeichnet, daß im Heizraum (2) Heizelemente (3) so bemessen und installiert werden, daß verschiedene Temperaturzonen (4-A/B u. C) entstehen und im Bereich des X Steuerrohres (5) über 40° C, im Bereich der Rohrschlangen (9) um ca. 60° C und im Bereich des Temperaturfühlers (10) eine Umgebungstemperatur über 65° C erreicht und gehalten wird.

2. Vorrichtung nach Anspruch 1 dadurch gekennzeichnet, daß der durch den Temperaturfühler (10) gesteuerte Regelautomat (12) den Verdampfungsbrennern (13) geregelt und dosiert immer nur die Energiemenge zuführt, die zur Verdampfung des durch die Rohrschlangen (9) fließenden Brennstoffes erforderlich ist und die Brennstofftemperatur hierbei unter 90° C gehalten wird.

3. Vorrichtung nach Anspruch 1 und 2 dadurch gekennzeichnet, daß Temperaturfühler (10) und Tauchrohr (10 A) eine Einheit bilden und so angeordnet sind, daß Temperaturänderungen des durchfließenden Brennstoffes ohne Verzögerungen über Kapillarrohr (11) zum Regelautomat (12) übertragen werden.

4. Vorrichtung nach Anspruch 1 dadurch gekennzeichnet, daß die Heizelemente (3) durch Infrarotstrahler, Gasbrenner, Elektroheizungen oder andere Wärmequellen dargestellt werden.

5. Vorrichtung nach Anspruch 1 und 4 dadurch gekennzeichnet, daß die Energiezufuhr zu den Heizelementen (3) in üblicher Weise temperaturabhängig über Thermostaten oder Regelgeräten gesteuert werden.

6. Vorrichtung nach Anspruch 1 dadurch gekennzeichnet, daß der Stromkreis zum Magnetventil (8) über Thermostat (7) nur dann geschlossen ist, wenn die Temperatur am Temperaturfühler (6) mindestens 40° C beträgt und daß der Thermostat (26) diesen Stromkreis unterbricht, wenn die Temperatur am Temperaturfühler (26 A) 80° C übersteigt.